# EUROPEAN PATENT APPLICATION

(11) **EP 1 391 250 A2**
(43) Date of publication of application: **25.02.2004**
(21) Application number: 03077539.9
(22) Date of filing: 11.08.2003
(51) Int. Cl.: B05D 7/02, C09J 7/02, C08J 3/12, C08J 7/04, C08J 9/00, B32B 7/00

(54) **Synthetic material and methods of forming and applying same**

(30) Priority: 13.08.2002 US 217991; 02.10.2002 US 415511 P; 06.08.2003 US 635064 P
(71) Applicant: L & L Products Inc., Romeo, MI 48065 (US)
(72) Inventor: Czaplicki, Michael J., Rochester, Michigan 48306 (US); Hable, Christopher, Romeo, Michigan 48065 (US); Madaus, Keith, Goodwells, Michigan 48027 (US); Kassa, Abraham, Shelby Twp., Michigan 48316 (US)
(74) Representative: Bawden, Peter Charles

(57) **Abstract**

A synthetic material (110) and articles incorporating the same are disclosed. The synthetic material includes a base material (112), which is at least partially tacky. Preferably, a coating, a powder (114), a film or a treatment is applied to the base material for providing a substantially non-tacky surface (116) to the synthetic material (110).

## Description

### CLAIM OF BENEFIT OF FILING DATE

The present application claims the benefit of the filing date of U.S. Application Serial No. 10/217,991 filed August 13, 2002, U.S. Provisional Application Serial No. 60/415,511 filed October 2, 2002 and U.S. Application Serial No. to be assigned (attorney docket no. 1001-121) filed August 6, 2003, all of which are hereby incorporated by reference for all purposes.

### FIELD OF THE INVENTION

The present invention relates to an improved synthetic material, and articles incorporating the same. More particularly, the present invention relates to a synthetic material having a tacky surface and a non-tacky surface wherein a base tacky material is treated, coated, covered or the like for forming the non-tacky surface.

### BACKGROUND OF THE INVENTION

It is generally known to apply a synthetic material such as an expandable material, a structural material, a foamable material or the like to an article of manufacture for imparting strength, acoustic damping characteristics or the like to the article. Such synthetic materials are frequently used in articles such as buildings, containers, automotive vehicles or the like. In certain situations, it may be desirable for one surface of such a synthetic material to be tacky while another surface of the material is substantially non-tacky, for example, to allow an individual applying the synthetic material to handle the non-tacky surface of the synthetic material while adhering the tacky surface of the material to an article. Such synthetic materials, however, can present difficulties. For example, the materials may be difficult to form, may cause substantial amounts of waste or the like. As another example, it may be difficult for the materials to maintain their adhesive properties. Thus, there is a need for a synthetic material having at least one tacky surface and at least one substantially non-tacky surface wherein the material overcomes one or more of the difficulties of prior synthetic materials.

### SUMMARY OF THE INVENTION

The present invention is directed to a synthetic material, a method of forming the synthetic material, articles incorporating the synthetic material and methods of applying or using the synthetic material. The synthetic material typically includes a base material that is tacky at a temperature of less than about 80 °C for providing at least one tacky surface. The synthetic material may also include a substantially non-tacky surface provided by a coating, film, a powder or a treatment applied to the base material. The coating, film, powder or treatment preferably provides the substantially non-tacky surface at a temperature of up to about 40 °C, but may exhibit adhesivity at a temperature greater than 120 °C (e.g. upon activation by heat or other stimulus).

### BRIEF DESCRIPTION OF THE DRAWINGS

The features and inventive aspects of the present invention will become more apparent upon reading the following detailed description, claims, and drawings, of which the following is a brief description:
Fig. 1 is a sectional view of an exemplary synthetic material according to one aspect of the present invention;
Fig. 2 is a sectional view of an exemplary synthetic material according to another aspect of the present invention;
Fig. 3 is a sectional view of an exemplary synthetic material according to yet another aspect of the present invention;
Fig. 4 is a sectional view of an exemplary synthetic material according to still another aspect of the present invention; and
Fig. 5 is a diagram of an exemplary method of forming synthetic material according to another aspect of the present invention.

### DETAILED DESCRIPTION OF THE INVENTION

The present invention is predicated upon an improved synthetic material, articles incorporating the material and a method for forming the material. Preferably, the method enables formation of the synthetic material with a tacky surface and a substantially non-tacky surface. It is also preferable for the synthetic material to assist in providing structural reinforcement, adhesion, sealing, acoustical damping properties or a combination thereof within a cavity or upon a surface of one or more structural members (e.g., a body panel or frame member) of an article of manufacture (e.g., an automotive vehicle). The synthetic material may be applied directly to structural members of articles of manufacture or it may be applied to a first member (e.g., a reinforcing member) followed by application of the member and the material to a structural member.

Generally, the synthetic material of the present invention includes a substantially non-tacky coating, film, powder layer or treatment that is applied to a tacky base material. This coating, film, powder layer or treatment is applied to at least one of a plurality of surfaces of the base material. In this manner, it is possible to form the synthetic material with at least one tacky surface and at least one substantially non-tacky surface. Preferably, the synthetic material is layered upon release paper such that a tacky surface of the synthetic material is releasably supported upon the paper.

### Base Material

Generally speaking, the base material of the present invention is at least partially tacky at room temperature (e.g., about 23 °C) and is also preferably tacky at temperatures between about 0 °C and about 80 °C. Additionally, the base material preferably exhibits reinforcement characteristics (e.g., imparts rigidity, stiffness, strength or a combination thereof to a member), acoustic characteristics (e.g., absorbs sound), sealing characteristics or other advantageous characteristics. It is also preferable for the base material to be heat activated to expand or otherwise activate and wet surfaces which the base material contacts. After expansion or activation, the base material preferably cures, hardens and adheres to the surfaces that it contacts. It is preferable for the coating, film or treatment to have minimal detrimental effects upon the adhesivity of the base material and it is contemplated that the coating, film or treatment may enhance the adhesivity of the base material.

Depending on the purpose of the synthetic material, it is preferable for base material to exhibit certain characteristics such that some or all of these characteristic may also be exhibited by the synthetic material. For application purposes, it is often preferable that the base material exhibit flexibility, particularly when the base material is to be applied to a contoured surface of an article of manufacture. Once applied, however, it is typically preferable for the base material to be activatable to soften, expand (e.g., foam), cure, harden or a combination thereof. For example, and without limitation, a typical base material will include a polymeric material, such as an epoxy resin or ethylene-based polymer which, when compounded with appropriate ingredients (typically a blowing and curing agent), expands and cures in a reliable and predicable manner upon the application of heat or the occurrence of a particular ambient condition. From a chemical standpoint for a thermally-activated material, the base material may be initially processed as a flowable material before curing. Thereafter, the base material preferably cross-links upon curing, which makes the material substantially incapable of further flow.

In most applications, it is undesirable for the base material to be reactive at room temperature or otherwise at the ambient temperature in a manufacturing environment (e.g. up to about 40 °C or higher). More typically, the base material becomes reactive at higher processing temperatures, such as those encountered in an automobile assembly plant. In such an embodiment, the base material may be foamed upon automobile components at elevated temperatures or at higher applied energy levels, e.g., during painting preparation steps. While temperatures (e.g., body shop temperatures or e-coat temperatures) encountered in an automobile assembly operations may be in the range of about 148.89° C to 204.44°C (about 300°F to 400°F), paint shop applications are commonly about 93.33°C (about 200°F) or slightly higher. If needed, blowing agent activators can be incorporated into the base material to cause expansion at different temperatures outside the above ranges.

Generally, suitable expandable materials or foams for the base material have a range of expansion ranging from approximately 0 to over 1000 percent. The level of expansion of the material may be increased to as high as 1500 percent or more. Typically, strength is obtained from materials that undergo relatively low expansion while materials intended for acoustic use (e.g., damping) typically undergo greater expansion.

Advantageously, the base material of the present invention may be formed or otherwise processed in a variety of ways. For example, preferred base materials can be processed by injection molding, extrusion, compression molding or with a robotically controlled extruder such as a mini-applicator. This enables the formation and creation of part designs that exceed the capability of most prior art materials.

It is contemplated that the base material may be formed of a variety of materials. For example, and without limitation, the base material may be formed primarily of plastics, thermoplastics, epoxy materials, elastomers and the like or combination thereof.

In one embodiment, the base material may be elastomer-based. In such an embodiment, the base material may include or be primarily composed of elastomers such as natural rubber, styrene-butadiene rubber, polyisoprene, polyisobutylene, polybutadiene, isoprene-butadiene copolymer, neoprene, nitrile rubber (e.g., a butyl nitrile, such as carboxy-terminated butyl nitrile), butyl rubber, polysulfide elastomer, acrylic elastomer, acrylonitrile elastomers, silicone rubber, polysiloxanes, polyester rubber, diisocyanate-linked condensation elastomer, EPDM (ethylene-propylene diene rubbers), chlorosulphonated polyethylene, fluorinated hydrocarbons, combinations thereof and the like. In one embodiment, recycled tire rubber may be employed. Examples of suitable elastomer-based materials, which may be used as in the base material are sold under the product designations L2701, L2663, L2609 and are commercially available from L&L Products, Romeo, Michigan. According to the preferred formulations, the base material includes up to about 30 % by weight elastomers, more preferably, up to about 40 % by weight elastomers, and even more preferably up to about 60 % by weight elastomers. Of course, the preferred amount of elastomer may vary depending upon the desired application of the synthetic material.

In other embodiments, it is contemplated that the base material may be thermoplastic-based. In such an embodiment the base material may include or be primarily composed of thermoplastic materials such as polyamides, polyolefins, polyethylene, polyvinyl chlorides, polypropylene, ethylene copolymers, terpolymers and the like and combinations thereof. According to the preferred formulations, the base material includes up to about 40 % by weight thermoplastics, more preferably, up to about 60 % by weight thermoplastics, and even more preferably up to about 80 % by weight thermoplastics. Of course, like the elastomer formulations, the amount of thermoplastic may vary depending upon the desired application of the synthetic material.

In a highly preferred embodiment, the base material is epoxy-based and includes or is primarily composed of various epoxy containing materials. The base material may be formed from variety of formulations having epoxy material and preferably epoxy resin integrated therein. Epoxy resin is used herein to mean any of the conventional dimeric, oligomeric or polymeric epoxy materials containing at least one epoxy functional group. The epoxy materials may be epoxy containing materials having one or more oxirane rings polymerizable by a ring opening reaction.

The epoxy may be aliphatic, cycloaliphatic, aromatic or the like. The epoxy may be supplied as a solid (e.g., as pellets, chunks, pieces or the like) or a liquid. The epoxy may include an ethylene copolymer or terpolymer that may possess an alpha-olefin. As a copolymer or terpolymer, the polymer is composed of two or three different monomers, i.e., small molecules with high chemical reactivity that are capable of linking up with similar molecules. One exemplary epoxy resin may be a phenolic resin, which may be a novalac type or other type resin. Other preferred epoxy containing materials may include a bisphenol-A epichlorohydrin ether polymer, or a bisphenol-A epoxy resin which may be modified with butadiene or another polymeric additive. Examples of suitable epoxy-based materials, which may be used as in the base material are sold under the product designations L5020, L5010, L5224, L8000, L5001 and are commercially available from L&L Products, Romeo, Michigan. According to preferred formulations, the base material can include up to about 50 % by weight epoxy resins, more preferably, up to about 65 % by weight epoxy resins, and even more preferably up to about 80 % by weight epoxy resins. Most preferably, the base material can include between about 45 % by weight epoxy resins or lower and about 75 % by weight epoxy resins or higher.

In preferred embodiments, a substantial portion of the materials in the base material will typically have molecular weights that are low enough to maintain adhesive capability of the base material. For an elastomer-based or epoxy-based base material, it is preferable for at least about 5 % by weight of the elastomer or epoxy materials to have a molecular weight less than about 1000 and more preferably at least about 10% by weight of the elastomer or epoxy materials have a molecular weight less than about 1000. It is also contemplated that, for maintaining adhesive capability, components such as plasticizers or processing oils may be added to elastomer-based or epoxy-based materials and particularly to the thermoplastic-based base material.

As general guidance for the base material, it is preferable that at least 1 % by weight of the components have a low enough molecular weight to be a liquid at about 23 °C. More preferably, at least 5 % by weight of the components have a low enough molecular weight to be a liquid at about 23 °C. Still more preferably, at least 10 % by weight of the components have a low enough molecular weight to be a liquid at about 23 °C.

### Coating

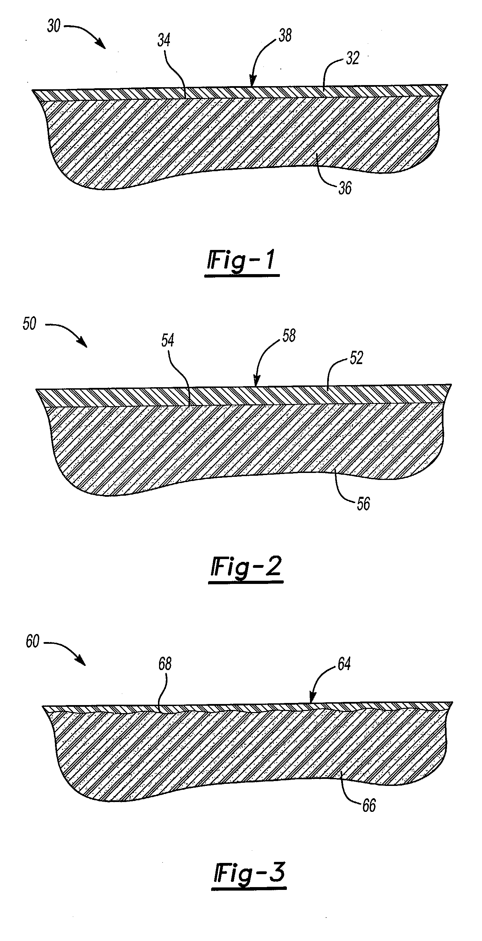

According to one preferred embodiment, and referring to Fig. 1, a synthetic material 30 has a coating 32 that at least partially covers a surface 34 of a base material 36 for providing a substantially non-tacky or tack free surface 38.

Preferably, the coating has some adhesive properties at elevated temperatures. For example, the coating may have a glass transition or activation temperature at or near the glass transition temperature or activation temperature of the base material (e.g., greater than 120 °C). Thus, the coating may become flowable and combine with the base material such that the coating, the base material or both can expand and/or adhere to a surface of a structural member.

Generally speaking, the coating is formed by applying an admixture to the base material in a partially or substantially liquid form followed by drying the admixture to form the coating. The admixture will typically include a combination of two or more of the following components: 1) one or more thermoplastic polymers; 2) one or more epoxy resins; 3) one or more curing agents (e.g., latent curing agents); and 4) a percentage solvent.

Preferably, the thermoplastic polymers, the epoxy resins, the curing agents or a combination thereof are provided in water-based forms to form the admixture as a water-based liquid, dispersion, emulsion, solution, a combination thereof or the like. It is also preferable for the thermoplastic polymers, the epoxy resins, the curing agents or combinations thereof to correspond and/or be identical to one or more components provided in the base material. Thus, any of the components of the admixture mentioned herein may also be present in the base material.

Examples of suitable thermoplastic materials include, but are not limited to, polyamides, polyolefins, polyethylene, polyvinyl chlorides, polypropylene, ethylenes combinations thereof or the like. The thermoplastic may be provided as a solid, but it preferably provided in at least partially liquid form (e.g., as an emulsion, a dispersion or the like). In one highly preferred embodiment, an ethylene based thermoplastic copolymer such as vinyl acetate ethylene is provided as an emulsion. According to preferred formulations, the admixture for the coating includes between about 5 % and about 50 % by weight thermoplastic polymers, more preferably, between about 10 % and about 30 % by weight thermoplastic polymers, and even more preferably between about 15 % and about 25 % by weight thermoplastic polymers.

Epoxy resin is used herein to mean any of the conventional dimeric, oligomeric or polymeric epoxy materials containing at least one epoxy functional group. The polymer-based materials may be epoxy containing materials having one or more oxirane rings polymerizable by a ring opening reaction. Preferably, the epoxy is provided as an emulsified resin. According to the preferred formulations, the admixture for the coating includes between about 5 % and about 50 % by weight epoxy resins, more preferably, between about 10 % and about 30 % by weight epoxy resins, and even more preferably between about 15 % and about 25 % by weight epoxy resins. It is also preferable for the epoxy resin to have an epoxy equivalent weight (EEW) of between about 200 and about 300, more preferably between about 220 and about 280 and even more preferably between about 240 and about 260.

The epoxy may be aliphatic, cycloaliphatic, aromatic or the like. The epoxy may be supplied as a solid (e.g., as pellets, chunks, pieces or the like) or a liquid (e.g., an epoxy resin). The epoxy may include an ethylene copolymer or terpolymer that may possess an alpha-olefin. As a copolymer or terpolymer, the polymer is composed of two or three different monomers, i.e., small molecules with high chemical reactivity that are capable of linking up with similar molecules. One exemplary epoxy resin may be a phenolic resin, which may be a novalac type or other type resin. Other preferred epoxy containing materials may include a bisphenol-A epichlorohydrin ether polymer, or a bisphenol-A epoxy resin which may be modified with butadiene or another polymeric additive.

Generally, for the coating it is preferable for the epoxy to be supplied such that the epoxy may be emulsified. In preferred embodiments, the epoxy is supplied as an emulsion or dispersion in a solvent such as water.

According to the preferred formulations, the admixture for the coating includes between about 0.0 % and about 5.0 % by weight curing agents, more preferably, between about 1.0 % and about 3.0 % by weight curing agents, and even more preferably between about 1.50% and about 1.80% by weight curing agents.

Preferably, the curing agents assist the admixture, the base material or both in curing by crosslinking of the polymers, epoxy resins (e.g., by reacting in near (e.g., ± 10 %) stoichiometric amounts of curing agent with the epoxide groups on the resins) or both. Useful classes of curing agents are materials selected from aliphatic or aromatic amines or their respective adducts, amidoamines, polyamides, cycloaliphatic amines, (e.g., anhydrides, polycarboxylic polyesters, isocyanates, phenol-based resins (such as phenol or cresol novolak resins, copolymers such as those of phenol terpene, polyvinyl phenol, or bisphenol-A formaldehyde copolymers, bishydroxyphenyl alkanes or the like), or mixtures thereof. Particular preferred curing agents include modified and unmodified polyamines or polyamides such as triethylenetetramine, diethylenetriamine tetraethylenepentamine, cyanoguanidine, dicyandiamides and the like.

According to the preferred formulations, the admixture for the coating includes between about 20 % and about 60 % by weight solvent or cosolvent, more preferably, between about 30 % and about 50 % by weight solvent or cosolvent, and even more preferably between about 35 % and about 40 % by weight solvent or cosolvent. Various different solvents may be present such as water, toluene, benzene, xylene, alcohol, ethanol, acetone or the like. In highly preferred embodiments, the solvent is greater than 30% water, more preferably greater than 70% water and still more preferably greater than 90 % water. It is also contemplated that the solvent may be entirely water.

In various embodiment of the invention, one or more fillers may also be added to the admixture for forming the coating including, but not limited to, particulated materials (e.g., powder), beads, microspheres, or the like. Preferably, the filler includes a relatively low-density material that is generally non-reactive with the other components present in the synthetic material. Fillers may be present up to 40 % by weight of the admixture, but are more preferably between about 15 % and about 20 % by weight of the admixture.

Examples of fillers include silica, diatomaceous earth, glass, clay, nanoclay, talc, pigments, colorants, glass beads or bubbles, glass, carbon ceramic fibers and the like. The clays that may be used as fillers may include clays from the kaolinite, illite, chloritem, smecitite or sepiolite groups, which may be calcined. Examples of suitable fillers include, without limitation, talc, vermiculite, pyrophyllite, sauconite, saponite, nontronite, montmorillonite or mixtures thereof. The clays may also include minor amounts of other ingredients such as carbonates, feldspars, micas and quartz. Titanium dioxide might also be employed.

Additional fillers may include mineral or stone type fillers such as calcium carbonate, sodium carbonate or the like may be used as fillers. In another preferred embodiment, silicate minerals such as mica may be used as fillers. It has been found that, in addition to performing the normal functions of a filler, silicate minerals and mica in particular.

Depending upon the particular application, other additives such as antioxidant may also be included in the admixture in amounts typically, but not necessarily, below 2 % by weight. In one highly preferred embodiment, the admixture includes a surfactant and a mineral oil defoamer.

One preferred exemplary formulation for the admixture is given in Table I directly below. It will be appreciated for all illustrative formulae provided in Tables herein, the concentrations specified are approximate, and the scope of the present invention encompasses broader ranges encompassing the amounts recited (e.g., by +/- 10% or more).

**Table I**

| Structural Coating: Preferred Formula | | | |
|---|---|---|---|
| **Ingredient** | **Percent Active** | **Total Amount in Weight %** | **Amount Active Ingredient in Wt. % active ingredient** |
| Emulsified Bisphenol A Epoxy Resin (EEW ∼250) in water | 62% | 33.88% | 34.23 |
| VAE Emulsion in water | 55% | 38.40% | 34.41 |
| Calcined Clay | 100% | 15.81% | 25.76 |
| Nanoclay | 100% | 1.13% | 1.84 |
| Dicyandamide | 100% | 1.69% | 2.75 |
| Surfactant | 100% | 0.56% | 0.91 |
| Mineral Oil Defoamer | 100% | 0.06% | 0.10 |
| Water | 0% | 8.47% | 0 |
| | | **100.00%** | **100.00%** |

It should be understood that, according to the exemplary formulation of Table I, the percent active material indicates the percentage of the ingredient that is not water or other solvent. Thus, for example, the Emulsified Bisphenol A Epoxy Resin in Water is about 62 % epoxy resin and about 38% water.

Formation of the admixture can be accomplished according to a variety of new or known techniques. Preferably, each of the components of the admixture are substantially liquid such that the components may be combined in a container and stirred or otherwise mixed. Typically, the admixture is formed as a material of substantially homogeneous composition. However, it is contemplated that various combining techniques may be used to increase or decrease the concentration of certain components in certain locations of the admixture.

For forming the coating, the admixture may be applied to the base material using a variety of techniques and protocols. According to a preferred embodiment, the admixture has a consistency similar to a conventional paint and may be applied to the base materials using techniques employed to apply paints. For example, and without limitation, the admixture may be applied to the base material by spraying, brushing, dabbing, pouring, blotting or the like.

As an alternative, the admixture may be applied to a first material such as a release paper to form the coating on the first material followed by contacting the coating with the base material. Thereafter, the first material may be removed from the coating thereby leaving the coating on the base material.

### Film

According to another preferred embodiment, and referring to Fig. 2, a synthetic material 50 has a film 52 that at least partially covers a surface 54 of a base material 56 for providing a substantially non-tacky or tack free surface 58.

Preferably, the film is formed (e.g., extruded) as a dry film that is substantially tackfree. The film may be rigid or semi-rigid, but is preferably substantially flexible such that the film may be rolled, folded or otherwise compacted allowing the film to be stored and applied to the base material as desired. Generally, it is desirable for the film to include components having higher molecular weights than the molecular weights of components in the base material, but similar chemical structures. Such higher molecular weights can assist the film to be substantially non-tacky at about room temperature (e.g., around 23 °C) and higher temperatures (e.g., up to about 40 °C, about 60 °C and even up to about 80 °C). Preferably, however, the film has some adhesive properties (e.g., when activated by heat or other stimuli) at elevated temperatures such as temperatures greater than about 120 °C, more preferably greater than about 140 °C and most preferably greater than 150 °C. For example, the film may have a glass transition or activation temperature at or near the glass transition temperature or activation temperature of the base material. Thus, the film may become flowable and combine with the base material such that the film, the base material or both can expand and/or adhere to a surface of a structural member. Moreover, the film is preferably non-inert or reactive (e.g., curable) along with other components of the film or the base material.

The film may be formed of polymeric materials such as polyethylene (e.g., polyethylene copolymers) or other polymeric material that may be extruded as dry films. Preferably, the film includes one or more adhesion promoting components such as comonomers of acrylic acid or the like.

According to a preferred formulation, the film includes a combination of two or more of the following components: 1) one or more polymeric materials; 2) one or more epoxy resins; 3) one or more elastomer-containing adducts; 3) one or more curing agents; and 4) one or more curing agent accelerators.

Examples of suitable polymeric materials include, but are not limited to, acetates, ethylenes, acrylates, combinations thereof or the like. In a highly preferred embodiment, the polymeric materials include a methacrylate such an ethyl or methyl methacrylate (EMA or MMA), which may or may not be modified by another component such as glycidyl methacrylate (GMA). According to preferred formulations, the film includes between about 5 % and about 50 % by weight polymeric materials, more preferably, between about 10 % and about 30 % by weight polymeric materials, and even more preferably between about 20 % and about 25 % by weight polymeric materials.

Epoxy resin is used herein to mean any of the conventional dimeric, oligomeric or polymeric epoxy materials containing at least one epoxy functional group. The polymer-based materials may be epoxy containing materials having one or more oxirane rings polymerizable by a ring opening reaction. The epoxy resins may be supplied as solids, liquids or combinations thereof. According to the preferred formulations, the film includes between about 5 % and about 50 % by weight epoxy resins, more preferably, between about 15 % and about 35 % by weight epoxy resins, and even more preferably between about 20 % and about 28 % by weight epoxy resins.

The epoxy may be aliphatic, cycloaliphatic, aromatic or the like. The epoxy may be supplied as a solid (e.g., as pellets, chunks, pieces or the like) or a liquid (e.g., an epoxy resin). The epoxy may include an ethylene copolymer or terpolymer that may possess an alpha-olefin. As a copolymer or terpolymer, the polymer is composed of two or three different monomers, i.e., small molecules with high chemical reactivity that are capable of linking up with similar molecules. One exemplary epoxy resin may be a phenolic resin, which may be a novalac type or other type resin. Other preferred epoxy containing materials may include a bisphenol-A epichlorohydrin ether polymer, or a bisphenol-A epoxy resin which may be modified with butadiene or another polymeric additive.

According to the preferred formulations, the film includes between about 0.0 % and about 5.0 % by weight curing agents, more preferably, between about 1.0 % and about 3.0 % by weight curing agents, and even more preferably between about 1.50% and about 2.50% by weight curing agents.

Preferably, the curing agents assist the film, the base material or both in curing by crosslinking of the polymers, epoxy resins (e.g., by reacting in stoichiometrically excess amounts of curing agent with the epoxide groups on the resins) or both. Useful classes of curing agents are materials selected from aliphatic or aromatic amines or their respective adducts, amidoamines, polyamides, cycloaliphatic amines, (e.g., anhydrides, polycarboxylic polyesters, isocyanates, phenol-based resins (such as phenol or cresol novolak resins, copolymers such as those of phenol terpene, polyvinyl phenol, or bisphenol-A formaldehyde copolymers, bishydroxyphenyl alkanes or the like), or mixtures thereof. Particular preferred curing agents include modified and unmodified polyamines or polyamides such as triethylenetetramine, diethylenetriamine tetraethylenepentamine, cyanoguanidine, dicyandiamides and the like.

The film may also include one or more curing agent accelerators such as a urea or an imidazole. Preferably, the film includes no more than 3% by weight curing agent accelerator, more preferably between about 0.25% and about 0.75% by weight curing agent accelerator.

In a highly preferred embodiment, an elastomer-containing adduct is employed in the film of the present invention. The epoxy/elastomer hybrid may be included in an amount of up to about 30 % by weight of the film. More preferably, the elastomer-containing adduct is approximately 5% to 25%, and more preferably is about 12% to 18% by weight of the film.

In turn, the adduct itself generally includes about 1:5 to 5:1 parts of epoxy to elastomer, and more preferably about 1:3 to 3:1 parts or epoxy to elastomer. The elastomer compound may be any suitable art disclosed elastomer such as a thermosetting elastomer. Exemplary elastomers include, without limitation natural rubber, styrene-butadiene rubber, polyisoprene, polyisobutylene, polybutadiene, isoprene-butadiene copolymer, neoprene, nitrile rubber (e.g., a butyl nitrile, such as carboxy-terminated butyl nitrile), butyl rubber, polysulfide elastomer, acrylic elastomer, acrylonitrile elastomers, silicone rubber, polysiloxanes, polyester rubber, diisocyanate-linked condensation elastomer, EPDM (ethylene-propylene diene rubbers), chlorosulphonated polyethylene, fluorinated hydrocarbons and the like. In one embodiment, recycled tire rubber is employed.

In various embodiments of the invention, one or more fillers may also be added to the film including, but not limited to, particulated materials (e.g., powder), beads, microspheres, or the like. Preferably, the filler includes a relatively low-density material that is generally non-reactive with the other components present in the synthetic material. Fillers may be present up to 60 % by weight of the film, but are more preferably between about 30 % and about 40 % by weight of the film.

Examples of fillers include silica, diatomaceous earth, glass, clay, nanoclay, talc, pigments, colorants, glass beads or bubbles, glass, carbon ceramic fibers, antioxidants, and the like. The clays that may be used as fillers may include clays from the kaolinite, illite, chloritem, smecitite or sepiolite groups, which may be calcined. Examples of suitable fillers include, without limitation, talc, vermiculite, pyrophyllite, sauconite, saponite, nontronite, montmorillonite or mixtures thereof. The clays may also include minor amounts of other ingredients such as carbonates, feldspars, micas and quartz. The fillers may also include ammonium chlorides such as dimethyl ammonium chloride and dimethyl benzyl ammonium chloride. Titanium dioxide might also be employed.

Additional fillers may include mineral or stone type fillers such as calcium carbonate, sodium carbonate or the like may be used as fillers. In another preferred embodiment, silicate minerals such as mica may be used as fillers. It has been found that, in addition to performing the normal functions of a filler, silicate minerals and mica in particular.

One preferred formulation for the film is given in Table II directly below:

**Table II.**

| Structural Film | |
|---|---|
| Ingredient | Amount by Weight Percentage |
| GMA Modified EMA | 7.5 |
| EMA (MI<2) | 15 |
| Solid Bisphenol A Epoxy Resin (Type I) | 15 |
| Solid Bisphenol A Epoxy Resin (Type IV) | 6 |
| Solid Epoxy Rubber Adduct | 15 |
| Liquid Bisphenol A Epoxy Resin | 3 |
| Calcined Clay | 36 |
| Dicyandiamide | 2 |
| Modified Imidazole | 0.5 |

The film may be applied to the base material using various techniques. The film may be manually or automatically applied to the base material. In one embodiment, the film and the base material may be extruded from separate extruders at substantially the same time such that the film may be continuously layered upon the base material. Thereafter, the base material and the film may be cut to shape as desire. Alternatively, the base material may be applied to a carrier member followed by layering the film (e.g., in a pre-cut configuration corresponding to the base material) upon the base material.

### Powder

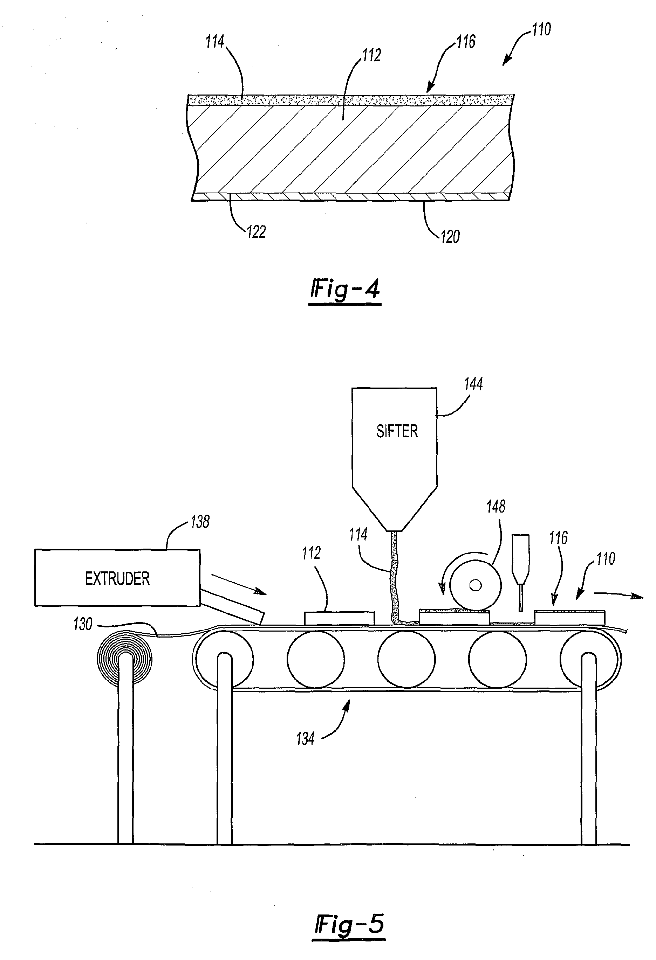

Referring to FIG. 4, there is illustrated an example of a synthetic material 110 according to the present invention. The synthetic material includes a base material 112 and a powder 114 applied thereon for forming a substantially non-tacky surface 116. In the embodiment shown, the synthetic material 110 is layered upon release paper 120 such that a tacky surface 122 of the synthetic material 110 is releasably supported upon the paper 120.

Generally, it is desirable for the powder to include components having higher molecular weights than the molecular weights of components in the base material, but similar chemical structures. Such higher molecular weights can assist the powder to be substantially non-tacky at about room temperature (e.g., around 23 °C) and higher temperatures (e.g., up to about 40 °C, about 60 °C and even up to about 80 °C). Preferably, however, the powder has some adhesive properties at elevated temperatures such as temperatures greater than about 120 °C, more preferably greater than about 140 °C and most preferably greater than 150 °C. More specifically, the powder preferably has a glass transition or activation temperature at or near the glass transition temperature or activation temperature of the base material. Thus, the powder may become flowable and combine with the base material such that the powder, the reinforcement material or both can expand and/or adhere to a surface of a structural member. Moreover, the powder is preferably non-inert or reactive (e.g., curable) along with other components of the powder or the base material.

In various embodiment of the invention, one or more fillers may also be added to the powder including, but not limited to, particulated materials (e.g., powder), beads, microspheres, or the like. Preferably, the filler includes a relatively low-density material that is generally non-reactive with the other components present in the powder. Fillers may be present up to 70 % by weight of the powder, but are more preferably between about 15 % and about 20 % by weight of the powder.

Examples of fillers include silica, diatomaceous earth, glass, clay, nanoclay, talc, pigments, colorants, glass beads or bubbles, glass, carbon ceramic fibers, antioxidants, and the like. The clays that may be used as fillers may include clays from the kaolinite, illite, chloritem, smecitite or sepiolite groups, which may be calcined. Examples of suitable fillers include, without limitation, talc, vermiculite, pyrophyllite, sauconite, saponite, nontronite, montmorillonite or mixtures thereof. The clays may also include minor amounts of other ingredients such as carbonates, feldspars, micas and quartz. The fillers may also include ammonium chlorides such as dimethyl ammonium chloride and dimethyl benzyl ammonium chloride. Titanium dioxide might also be employed.

Additional fillers may include mineral or stone type fillers such as calcium carbonate, sodium carbonate or the like may be used as fillers. In another preferred embodiment, silicate minerals such as mica may be used as fillers.

Other additives may be included in the powder as well such as pigments, dyes or the like. In one preferred embodiment, the powder may include metallic or other components for making the synthetic material appropriate for weld-through operations. Examples of appropriate weld-through assisting additives include powdered carbon or graphite, metal compounds, metallic fibers, iron phosphate or the like. It is additionally contemplated that such weld-through assisting additives may be added to the base material.

Formation of the powder may be accomplished according to a variety of techniques. According to one technique, the various components are mixed together at elevated temperatures (e.g., between about 80° C to about 150° C) in a mixer (e.g., a double arm mixer, a Shaw or Bambury mixer, an extruder or the like). Preferably, the components are mixed, extruded or the like to form the components into substantially homogenous pieces (e.g., chunks, pellets or the like). Thereafter, the pieces are ground into a powder. Grinding of the pieces may be accomplished by various techniques including micro-pulverizing, hammer-milling, jet-milling or the like. The preferred particle size of the powder is between about 10 microns and about 1000 microns, more preferably between about 25 microns and about 500 microns and even more preferably between about 50 microns and 300 microns. Optionally, sieving processes may be employed intermittently or simultaneously with the grinding of the pieces to assure that substantially all the particles are of the desired size.

Once formed, the powder may be applied to the base material to form the synthetic material using a variety of techniques. Depending on how the base material is formed, the powder may be manually, automatically or otherwise applied to the base material. In preferred embodiments, however, the powder is automatically applied or dispensed to the base material by pouring, sifting, straining or the like.

Referring to FIG. 5, there is illustrated one preferred method of forming the synthetic material 110 of FIG. 4. As shown, the base material 112 is applied (e.g., extruded) onto release paper 130 that is being advanced along a conveyor belt 134. In the embodiment shown, the base material is extruded via a single or twin screw extruder 138, although, the base material 112 may be otherwise applied. The base material 112 may be applied, as desired, in various patterns, shapes or thicknesses onto the release paper 130. Alternatively, the base material 112 may be applied and then die cut or otherwise formed into a desired configuration.

After extrusion, the base material 112 is advanced along the conveyor belt 134 below a sifter 144 from which the powder 114 is poured (e.g., sifted) onto one or more surfaces of the base material 112 thereby forming a layer of the powder 114 on the base material 112. Preferably, a roller 148 or other compression system is provided for pressing the powder 114 into intimate contact with the base material 112 to form the synthetic material 110 such that the powder layer that has been substantially integrated into the base material 112 and such that the layer of powder 114 provide the at least one substantially non-tacky surface 116.

For base material 112 that has been extruded or otherwise formed as desired, one or more surfaces of the base material 112 may be covered (e.g., with release paper or otherwise) while the powder 114 is applied to all exposed surfaces (e.g., surfaces not contacting the release paper). Advantageously, the powder 114 will then remove at least a substantial portion of the tackiness or pressure sensitivity from each of the exposed surfaces (e.g., including edges of the base material) such that no tacky surfaces are exposed during transport or otherwise prior to application of the synthetic material.

As an added advantage, the powder of the present invention allows for the recycling of the powder, the synthetic material or both. In this regard, a portion of the powder that is applied or dispensed upon the base material may not actually adhere to the base material. Advantageously, such powder may be collected by a vacuum system or otherwise and be reapplied to other base material. Moreover, certain excess portions of the synthetic material, once formed, may be cut away from or otherwise removed from the synthetic material during shaping or further processing of the synthetic material. Advantageously, these excess portions of the material may be recycled by introducing the portions into the extruder or other dispenser and forming more base material therewith. Moreover, the recycling of the synthetic material does not significantly affect the properties of the base material being formed since the powder is only a relatively small proportion of the synthetic material and the powder is preferably formed of a subset of the materials of the base material (e.g., correspondence components).

### Correspondence Components

In highly preferred embodiments, the components of the film, the powder or the coating include one or a subset of correspondence components. As used herein, correspondence components are polymeric components in the film, powder or coating that correspond to polymeric components present in the base material. A correspondence component may be a component in the film, powder or coating that is substantially identical to a component in the base material. For example, the base material may include a bisphenol-A epoxy resin and the film, powder or coating may include the exact same bisphenol-A epoxy resin as a correspondence component. Alternatively, a correspondence component may be a component of the film, powder or coating having a substantially identical monomer or oligomer configuration to it corresponding component in the base material, but the correspondence component may have a greater or lower molecular weight or a longer or shorter polymeric chain structure. As another alternative, a correspondence component may be a component in the coating, powder or film that is only insubstantially different from its corresponding component in the base material (e.g., exhibits substantially the same characteristics, has at least a similar polymeric structure, but has a higher or lower molecular weight).

It is generally preferable for the coating, powder or film to include a substantial proportion of correspondence components. In one embodiment, the coating, powder or film includes at least about 30 % by weight correspondence components, more preferably at least about 60 % by weight correspondence components and even more preferably at least about 70 % by weight correspondence components.

Molecular weights of the correspondence components may vary across a reasonably large range. In a preferred embodiment, the molecular weights of the correspondence components are between about 1000 and about 10,000,000 and more preferably between about 10,000 and about 1,000,000. One example of suitable elastomeric correspondence component is nitrile rubber such as copolymers of acrylonitrile and butadiene, which may be supplied as a liquid or a solid and which may or may not be carboxylated. Another example of a suitable correspondence component is ethylene propylene diene monomer (EPDM) rubber, which also may be supplied as a solid or a liquid.

In a highly preferred embodiment, the synthetic material includes a base material that is formed of an epoxy-based material and a coating, powder or film that is formed of an epoxy-based material. In the embodiment, the coating, powder or film is formed of a combination of two or more of the following components: 1) epoxy resin; 2) thermoplastic (preferably epoxy-based); 3) elastomer-containing adduct; 4) curing agent; 5) catalyst; and 6) curing accelerator. Preferably, the epoxy resin and/or epoxy-based thermoplastic are of sufficiently high molecular weight to be solid at about room temperature (e.g., about 23° C), but are of low enough molecular weight to be at least partially liquid at elevated temperatures.

Again, epoxy resin is used herein to mean any of the conventional dimeric, oligomeric or polymeric epoxy materials containing at least one epoxy functional group. The polymer-based materials may be epoxy containing materials having one or more oxirane rings polymerizable by a ring opening reaction. According to the preferred formulations, the coating, powder or film includes between about 30 % and about 95 % by weight epoxy resins, more preferably, between about 40 % and about 85 % by weight epoxy resins, and even more preferably between about 50 % and about 75 % by weight epoxy resins. For epoxy resin coatings, powders or film, correspondence components preferably compose at least about 50 % by weight of the coating, powder or film, more preferably at least about 60 % by weight of the coating, powder or film and even more preferably at least about 70 % by weight of the coating, powder or film.

The epoxy may be aliphatic, cycloaliphatic, aromatic or the like. The epoxy may be supplied as a solid (e.g., as pellets, chunks, pieces or the like) or a liquid. The epoxy may include an ethylene copolymer or terpolymer that may possess an alpha-olefin. As a copolymer or terpolymer, the polymer is composed of two or three different monomers, i.e., small molecules with high chemical reactivity that are capable of linking up with similar molecules. One exemplary epoxy resin may be a phenolic resin, which may be a novalac type or other type resin. Other preferred epoxy containing materials may include a bisphenol-A epichlorohydrin ether polymer, or a bisphenol-A epoxy resin, which may be modified with butadiene or another polymeric additive.

Examples of suitable thermoplastics may include, but are not limited to, polyamides, polyolefins, polyethylene, polyvinyl chlorides, polypropylene, ethylene copolymers and terpolymers, combinations thereof or the like. In one highly preferred embodiment, an epoxy-based thermoplastic such as a polyhydroxyether or phenoxy resin is provided in the powder. According to preferred formulations, the coating, powder or film includes between about 2 % and about 25 % by weight thermoplastic resin, more preferably, between about 5 % and about 15 % by weight thermoplastic resin, and even more preferably between about 9 % and about 13 % by weight thermoplastic resin.

In a highly preferred embodiment, an elastomer-containing adduct is employed in the coating, powder or film of the present invention. The epoxy/elastomer hybrid may be included in an amount of up to about 30 % by weight of the coating, powder or film. More preferably, the elastomer-containing adduct is approximately 3% to 20%, and more preferably is about 7% to 13% by weight of the coating, powder or film. Additionally, the epoxy/elastomer hybrid may be a correspondence component.

In turn, the adduct itself generally includes about 1:5 to 5:1 parts of epoxy to elastomer, and more preferably about 1:3 to 3:1 parts or epoxy to elastomer. The elastomer compound may be any suitable art disclosed elastomer such as a thermosetting elastomer. Exemplary elastomers include, without limitation natural rubber, styrene-butadiene rubber, polyisoprene, polyisobutylene, polybutadiene, isoprene-butadiene copolymer, neoprene, nitrile rubber (e.g., a butyl nitrile, such as carboxy-terminated butyl nitrile), butyl rubber, polysulfide elastomer, acrylic elastomer, acrylonitrile elastomers, silicone rubber, polysiloxanes, polyester rubber, diisocyanate-linked condensation elastomer, EPDM (ethylene-propylene diene rubbers), chlorosulphonated polyethylene, fluorinated hydrocarbons and the like. In one embodiment, recycled tire rubber is employed.

According to the preferred formulations, the coating, powder or film includes between about 3.0 % and about 20.0 % by weight curing agents, more preferably, between about 6.0 % and about 15.0 % by weight curing agents, and even more preferably between about 8.0 % and about 10.0 % by weight curing agents.

Preferably, the curing agents assist the coating, the powder the film, the base material or a combination thereof in curing by crosslinking of the polymers, epoxy resins (e.g., by reacting in stoichiometrically excess amounts of curing agent with the epoxide groups on the resins) or both. Useful classes of curing agents are materials selected from aliphatic or aromatic amines or their respective adducts, amidoamines, polyamides, cycloaliphatic amines, (e.g., anhydrides, polycarboxylic polyesters, isocyanates, phenol-based resins (such as phenol or cresol novolak resins, copolymers such as those of phenol terpene, polyvinyl phenol, or bisphenol-A formaldehyde copolymers, bishydroxyphenyl alkanes or the like), or mixtures thereof. Particular preferred curing agents include modified and unmodified polyamines or polyamides such as triethylenetetramine, diethylenetriamine tetraethylenepentamine, cyanoguanidine, dicyandiamides and the like. It is also contemplated that curing agent accelerators may be included in the coating, powder or film.

### Multi-stage Cure

According to another preferred embodiment, and referring to Fig. 3, a synthetic material 60 provides a substantially non-tacky or tack free surface 64 by partially or multistage curing of a base material 66. For example, a portion of the base material may be exposed to a stimulus to partially cure a portion of the base material, e.g. a cure to a predetermined depth (e.g., on the order of about 1 mil to about 2 mm), or a cure in certain regions along or within the mass of material. The synthetic material 60 is illustrated with a partially cured portion 68 that was formed by exposing at least one portion of the surface 64 of the sealant material to ultraviolet (UV) light, UV radiation, moisture, infrared light, heat or the like from a stimulus source to cross-link or otherwise cure the partially cured portion 68. As can be seen, the remainder of the sealant material 60 forms a second portion 70, which can be cured at a later time or different location. In such an embodiment, it may be desirable to incorporate a small amount of catalyst (e.g., no greater than about 3% by weight and more preferably no greater than about 1% by weight) such as a UV activated cationic catalyst (e.g., CYRACURE UVI-6992, commercially available from The Dow Chemical Corporation). Multi-stage curing processes are also discussed in a commonly owned co-pending patent application serial no. 09/939,245, titled "Paintable Material", and herein fully incorporated by reference for all purposes.

### Application

Generally, the synthetic material is applied to a member of an article of manufacture. The member may be a structural member (e.g., a member designed to withstand various loads) or another member. According to one preferred embodiment, the member may be part of an automotive vehicle. For example, the member might be a frame member, a body member, a bumper, a pillar, a panel, a support structure or the like of an automotive vehicle.

Preferably, the synthetic material is applied directly to a member such that the material can provide reinforcement; acoustic damping, sealing or the like to the member or adjacent members. For application, an individual or machine may remove (e.g., peel) the synthetic material from the release paper to expose its tacky surface. Thereafter, the individual or machine can place the tacky surface in contact with a member to adhere the synthetic material to the member. Once applied, the synthetic material may be activated by heat or otherwise to expand and adhere to adjacent surfaces of various members of the article of manufacture. Advantageously, the non-tacky surface of the synthetic material allows for case of initial contact and subsequent contact (e.g. for repositioning) with the non-tacky surface for application of the synthetic material.

According to an alternative embodiment, the synthetic material may be applied to a first member (e.g., a carrier member) for forming a reinforcement member and then the reinforcement member may be applied to a member of an article of manufacture. In the embodiment, the tacky surface of the synthetic material is adhered to a surface of a carrier member (e.g., a skeleton member) with at least one exposed and preferably substantially non-tacky surface facing at least partially away from the surface of the carrier member thereby forming the reinforcement member. Advantageously, the non-tacky surface can allow for easier placement of the reinforcement member adjacent to a structural member or for easier placement of the reinforcement member within a cavity of the structural member of an article of manufacture since the non-tacky surface does not undesirably adhere to surfaces of the structural member during placement. In a particular preferred embodiment, the carrier member could be formed of injection molded nylon, injection molded polymer, or molded metal (such as aluminum, magnesium, steel and titanium, an alloy derived from the metals, and even a metallic foam).

The preferred embodiment of the present invention has been disclosed. A person of ordinary skill in the art would realize however, that certain modifications would come within the teachings of this invention. Therefore, the following claims should be studied to determine the true scope and content of the invention.

## Claims

1. A method of forming a synthetic material, comprising :
providing a base material for of one or more components, the base material being an expandable material that is tacky at a temperature between about 0 °C and about 80 °C; and
providing at least one substantially non-tacky surface to the base material to form the synthetic material with the at least one substantially non-tacky surface and at least one tacky surface.

2. A method as in claim 1 wherein the step of providing at least one substantially non-tacky surface includes forming a liquid admixture and applying the liquid admixture to at least one surface of the base material for forming a coating, the coating including the at least one substantially non-tacky surface.

3. A method as in claim 2 wherein the coating includes one or more correspondence components corresponding to the one or more components of the base material.

4. A method as in claim 1 wherein the step of providing at least one substantially non-tacky surface includes applying a film to at least one surface of the base material such that the film provides the at least one substantially non-tacky surface.

5. A method as in claim 4 wherein the film includes one or more correspondence components corresponding to the one or more components of the base material.

6. A method as in claim 1 wherein the step of providing at least one substantially non-tacky surface includes dispensing a powder upon the base material to form the at least one substantially non-tacky surface, the powder being substantially non-tacky at a temperature of about 23 °C, the powder exhibiting adhesivity at a temperature greater than 80 °C.

7. A method as in claim 6 wherein the powder includes one or more correspondence components corresponding to the one or more components of the base material.

8. A method as in claim 3, 5 or 7 wherein the one or more correspondence components have a substantially identical monomer and/or oligomer configuration relative to the one or more components of the base material.

9. A method as in claim 3, 5, 7 or 8 wherein the one or more correspondence components include at least one epoxy resin material.

10. A method as in claim 3, 5, 7, 8 or 9 further comprising applying the synthetic material to a member of an automotive vehicle by contacting the substantially non-tacky surface of the synthetic material such that the tacky surface of the synthetic material contacts the member of the automotive vehicle.

11. A method as in claim 1 wherein the step of providing at least one substantially non-tacky surface includes at least partially curing a surface of the base material such that the surface of the base material become the substantially non-tacky surface.

12. A method as in claim 3 wherein the admixture includes between about 20% and about 60% by weight solvent or cosolvent and wherein the correspondence components are at least partially dissolved in the solvent or cosolvent;

13. A method as in claim 12 further comprising drying the liquid admixture to form the coating upon the base material thereby forming the synthetic material.

14. A method as in claim 12 or 13 wherein the one or more correspondence components comprise at least about 60% by weight of the coating.

15. A method as in claim 12, 13 or 14 wherein the solvent or cosolvent is selected from water, toluene, benzene, xylene, alcohol, ethanol, acetone or a combination thereof.

16. A method as in claim 12, 13, 14 or 15 wherein the admixture includes between about 5% and about 50% by weight epoxy resin and the epoxy resin has an EEW between about 200 and about 300 and wherein the epoxy resin represents at least a portion of the one or more correspondence components.

17. A method of reinforcing or providing acoustical damping to a member of an article of manufacture with a synthetic material comprising:
providing a base material, the base material including primarily epoxy components, the base material being tacky at a temperature of about 23 °C;
providing a powder, the powder including primarily epoxy based correspondence components, the powder being substantially non-tacky at a temperature of about 23 °C, the powder exhibiting adhesivity at a temperature greater than 80 °C;
dispensing the powder upon the base material to form the synthetic material with at least one substantially non-tacky surface and at least one tacky surface; and
applying the synthetic material to the member of the article of manufacture.

18. A method as in claim 17 wherein the step of applying the synthetic material includes contacting the non-tacky surface of the synthetic material such that the tacky surface of the synthetic material is adhered to the member.

19. A method as in claim 17 or 18 further comprising, applying release paper to the tacky surface of the synthetic material.

20. A method as in claim 17, 18 or 19 wherein the step of applying the synthetic material to the member also includes removing said release paper from said synthetic material.

21. A method as in claim 17, 18, 19 or 20 wherein the article of manufacture is an automotive vehicle and the member is selected from the group consisting of a frame member and a body member of the automotive vehicle.

22. A method as in claim 17, 18, 19, 20 or 21 wherein the one or more correspondence components are substantially identical to one or more components in the base material.
